# EUROPÄISCHE PATENTANMELDUNG

(11) **EP 0 543 167 A1**
(43) Veröffentlichungstag der Anmeldung: **26.05.1993**
(21) Anmeldenummer: 92118065.9
(22) Anmeldetag: 22.10.1992
(51) Int. Cl.: H02G 3/26, F16L 3/22

(54) **Schwenkbarer Bügel zur Befestigung von Kabelrinnen, Kabelpritschen o.dgl. an einer Decke**

(30) Priorität: 16.11.1991 DE 4137784
(71) Anmelder: Rieth & Co. GmbH, D-73230 Kirchheim (DE)
(72) Erfinder: Mätzler, Eberhard, W-7311 Notzingen (DE)
(74) Vertreter: Rüger, Rudolf, Dr.-Ing.

(57) **Zusammenfassung**

Die Erfindung geht von der Aufgabe aus, eine Halteeinrichtung (4) zur Befestigung von Kabelrinnen (1), Kabelpritschen o.dgl. an einer Decke (2) zu schaffen, mit der eine platzsparende Befestigung derselben an Decken (2) ermöglicht wird, wobei die Kabelrinnen (1) und die darin verlegten Kabel zugänglich sein sollen.

Die Halteeinrichtung (4) weist einen zur Aufnahme und formschlüssigen Halterung einer Kabelrinne (1) od.dgl. eingerichteten U-förmigen Bügel (3), mit zwei seitlichen, voneinander beabstandeten Seitenschenkeln (12, 13) auf, die durch einen Trageteil (11) miteinander verbunden sind, auf dem eine Kabelpritsche oder -rinne (1) aufliegt, wobei einer der Seitenschenkel (12) zur Anbringung an der Decke (2) mittels Befestigungselementen (19) eingerichtet ist. Erfindungsgemäß ist ein an der Decke (2) mittels eines weiteren Befestigungselementes (25) anzubringendes Scharnier (27) vorgesehen, wobei das Scharnier (27) dem anderen Seitenschenkel (13) zugeordnet ist. Die Halteeinrichtung (4) ist aufklappbar, so daß der Zugang zu der Kabelrinne (1) gewährleistet ist.

## Beschreibung

Gegenstand der Erfindung ist eine Halteeinrichtung gemäß dem Oberbegriff des Patentanspruchs 1.

In Einrichtungen und Gebäuden ist häufig eine große Anzahl von elektrischen Kabeln zur Energieversorgung oder zum Datentransport fest verlegt. Die Kabel sind dabei zumindest in den Abschnitten, in denen mehrere Kabel gemeinsam verlegt sind, in Kabelrinnen oder auf Kabelpritschen zusammengefaßt. Mittels geeigneter Tragkonstruktionen sind die Kabelrinnen oder Kabelpritschen an wänden oder Decken des betreffenden Gebäudes fest installiert. Bei Einzelrinnen werden sogenannte Deckenbügel verwendet.

Der aus der Praxis bekannte, zur Halterung der Kabelrinne verwendete Deckenbügel weist einen in Seitenansicht etwa U-förmigen Abschnitt auf, in dem die Kabelrinne aufgenommen ist. Ein Schenkel des U-förmigen Abschnittes ist nach oben verlängert und L-förmig abgebogen. Dadurch entsteht ein passend zu der Decke verlaufender Befestigungsabschnitt, der mit der Geschoßdecke verschraubt ist.

Zur Gewährleistung des Zuganges zu der Kabelrinne, etwa um die Kabelrinnen selbst oder die Kabel einlegen oder bei Änderungen herausnehmen zu können, sind die Deckenbügel so ausgeführt, daß die Kabelrinne in einem größeren Abstand unterhalb der Decke hängt. Die wegen des erforderlichen Zugangs zu den Kabelpritschen große Bauhöhe des Deckenbügels von etwa 170 mm ist zu der lichten Höhe unterhalb des Deckenbügels zu addieren. Die erforderliche Bauhöhe des Deckenbügels wird noch vergrößert, wenn Kabelrinne mit anderen festen Installationen bspw. Wasserrohren oder anderen Leitungen kreuzt. Aus dem zur Verlegung und Beschickung der Kabelrinnen erforderlichen Mindestabstand der Kabelrinne zu den genannten Installationen resultiert eine Geschoßhöhe, die erheblich größer ist als die lichte Höhe unterhalb der Kabelrinne.

Um provisorisch einzelne Kabel und Leitungen zu verlegen, beispielsweise in Studios und bei Filmaufnahmen, ist es aus dem DE-Gm 91 O7 839 bekannt, einen S-förmig geschlungenen Haken zu verwenden, der mit einem Ende auf ein Rohr oder ein anderes geeignetes tragfähiges Konstruktionselement gehängt wird. In die andere, nach oben offene Schlaufe des S-förmigen Hakens werden dann die Kabel, die provisorisch zu installieren sind, eingelegt, wobei sie von Haken zu Haken frei durchhängen und vollkommen ungeschützt sind.

Davon ausgehend, ist es die Aufgabe der Erfindung, eine Halteeinrichtung zur Befestigung von Kabelrinnen, Kabelpritschen o.dgl. zu schaffen, mit der eine platzsparende Befestigung derselben an Geschoßdecken ermöglicht wird, wobei die Kabelrinnen und die darin verlegten Kabel zugänglich sein sollen.

Die vorstehend genannte Aufgabe wird durch eine Halteeinrichtung mit den Merkmalen des Patentanspruchs 1 gelöst.

Wenn der Bügel an der Decke auf der einen Seite durch ein Befestigungselement und auf der anderen Seite über ein Scharnier befestigt ist, ist der Bügel auf beiden Seiten sicher und zuverlässig an der Decke gehalten. Die auf den Bügel einwirkenden Verformungskräfte sind durch die beidseitige Halterung gering; eine Verformung durch die Last der aufliegenden Kabelpritschen ist kaum zu befürchten.

Die Länge der Seitenschenkel entspricht gerade der Höhe einer Kabelrinne, wodurch diese in geringem Abstand unmittelbar unter der Decke gehalten ist. Bei der Verlegung von Kabelrinnen insbesondere in öffentlich genutzten Räumen ohne zusätzliche Zwischendecke, wie bspw. in Garagen o.ä., hat die Erfindung dadurch den Vorteil, daß die Kabelrinnen mit der Decke einen geschlossenen Kanal bilden, der für Unbefugte unzugänglich ist.

Werden die Bügel lediglich an der dem Scharnier gegenüberliegenden Seite von der Decke gelöst, sind sie von der Decke herunterklappbar. In diesem Zustand sind die Kabelrinnen gut zugänglich. Auf einfache Weise ist das Einziehen von Leitungen oder Kabeln möglich.

Wenn der Bügel mit der Kabelrinne an die Decke hochgeklappt wird und dort befestigt wird, benötigt er äußerst wenig Platz; nämlich kaum mehr als die Höhe der Kabelrinne erfordert. Bei Verwendung der erfindungsgemäßen Halteeinrichtung reicht deshalb ein äußerst geringer Abstand zwischen der Geschoßdecke und einer eventuell zur Abdeckung der Installationen verwendeten Zwischendecke aus. Bei Kabelrinnen mit einer Höhe von 35 mm ergibt sich ein Gewinn gegenüber bisher in der Praxis verwendeten Bügeln von deutlich über 130 mm.

Mit der erfindungsgemäßen Halteeinrichtung können bei der Verlegung von Kabelrinnen bisher nichtnutzbare Freiräume ausgenutzt werden. Die Kabelrinne kann bspw. zwischen der Decke und darunter abgehängten Rohrleitungen verlegt werden, obwohl der Abstand zwischen der Decke und der Rohrleitung in der Regel geringer als 100 mm ist. Ein aufwendiges und platzintensives Umgehen der Rohrleitung erübrigt sich.

Eine einfache und unkomplizierte Lösung ergibt sich, wenn das Scharnier eine Schwenkachse aufweist, die parallel zu der Längserstreckung der Kabelrinne angeordnet ist. Beim Öffnen des aus der Decke und der Kabelrinne gebildeten Kabelkanals vollführen so der Bügel und die Kabelrinne dieselbe Schwenkbewegung.

Es wird eine besonders robuste Anordnung erhalten, wenn das Scharnier einen die Schwenkachse bestimmenden zylindrischen Lagerbolzen aufweist. Das Scharnier kann auf diese Weise sehr leichtgängig ausgeführt werden. Die Schwenkbewegung kann bereits erfolgen, wenn lediglich ein Befestigungselement gelöst worden ist.

Es ist sehr vorteilhaft, wenn der schwenkbar gelagerte U-förmige Bügel ein Anschlagmittel zur Begrenzung der Schwenkbewegung aufweist. Auf diese Weise werden der Bügel und die indem Bügel gehaltene Kabelrinne vor zu weitem Herunterklappen gesichert, so daß bereits in der Kabelrinne liegende Kabel nicht aus der Kabelrinne herausfallen können. Außerdem wird eine übermäßige Torsionsbeanspruchung vermieden, wenn die Kabelrinne lediglich abschnittsweise von der Decke heruntergeklappt wird.

Eine einfache Lösung für das Anschlagmittel, ist ein von dem Seitenteil wegstehender Fortsatz. Dieser kann sich an der Decke abstützen.

Eine besonders einfache und vorteilhafte Ausführungsform der Halteeinrichtung ergibt sich, wenn der Lagerbolzen einen Durchmesser aufweist, der deutlich größer als der Durchmesser eines Bolzens ist, und teilzylindrisch ausgebildet ist. Dadurch wird die Vorraussetzung dafür geschaffen, daß das Scharnier besonders einfache ausgeführt und auf sehr wenige Teile reduziert werden kann.

Um einen sicheren Sitz des teilzylindrischen Lagerbolzens in dem gebogenen Seitenschenkel und eine Verformung des Seitenschenkels beim Anbringen des Bügels zu vermeiden, ist es vorteilhaft, wenn der mit dem Scharnier verbundene Seitenschenkel einen kreisbogenförmig gebogen Lagerabschnitt aufweist, dessen Biegeradius etwas größer ist als der Radius der Mantelfläche des teilzylindrischen Lagerbolzens.

Die Verbindung zwischen dem teilzylindrischen Lagerbolzen und dem weiteren Befestigungselement kann auf besonders einfache Weise dadurch erreicht werden, daß der Lagerbolzen eine Bohrung aufweist, die ungefähr mittig und radial angeordnet ist und deren Durchmesser größer ist als der Durchmesser des als Befestigungselement dienenden Bolzens. Wenn der kreisförmig gebogene Seitenschenkel ein sich in der Umfangsrichtung seiner Biegung erstreckendes Langloch aufweist, dessen Breite größer ist als der Bolzen, kann der Bolzen durch das Langloch und das Loch in dem Lagerbolzen durchgehen. Bei dieser Anordnung ist das Scharnier in spezieller Ausbildung aus dem kreisbogenförmig gebogenen Abschnitt des Seitenschenkels, dem teilzylinderischen Lagerbolzen und dem durch die beiden Teile durchgehenden Bolzen gebildet. Dieses Scharnier läßt eine begrenzte Schwenkbewegung des Bügels zu. Es ist besonders einfach zu fertigen, wobei die Anzahl der verwendeten Teile minimal ist. Dieses Scharnier ist besonders stabil und widerstandsfähig gegen größere Lasten. Bei der Herstellng des Bügels ist die Verformungsbeanspruchung des Materials des Bügels aufgrund der relativ großen Biegeradien im Bereich des Scharniers vergleichsweise gering.

Das Anschlagmittel kann in besonders einfacher Weise dadurch ausgebildet sein, daß der Seitenschenkel ein freies Ende aufweist, das in gerader Verlängerung des Bügels von dem Lagerbolzen wegweist. Dieses Anschlagmittel legt sich bei heruntergeklapptem Bügel an die Decke an und verhindert ein weiteres Abklappen. Der Schwenkbereich des Bügels ist durch den Winkel, den der Trageteil mit dem Anschlagmittel einschließt, auf einfache Weise festgelegt.

Die Befestigungselemente können als in Gebäudeteilen verankerbare gewindetragende Bolzen ausgeführt sein. Das hat insbesondere den Vorteil, daß der Bügel mittels Sechskantmuttern befestigbar ist.

In der Zeichnung sind nachstehend Ausführungsbeispiele der Erfindung erläutert. Es zeigen:
- Fig. 1: ein erstes Ausführungsbeispiel einer an einer Decke montierten und geschlossenen Halteeinrichtung mit einer Kabelrinne in Seitenansicht,
- Fig. 2: die Halteeinrichtung nach Fig. 1 in geöffnetem Zustand in Seitenansicht,
- Fig. 3: ein zweites Ausführungsbeispiel der Halteeinrichtung für eine Kabelrinne in Explosivdarstellung,
- Fig. 4: die an der Decke montierte und geschlossene Halteeinrichtung nach Fig. 3 in Seitenansicht und
- Fig. 5: die an der Decke montierte Halteeinrichtung nach Fig 3 in geöffnetem Zustand und in Seitenansicht.

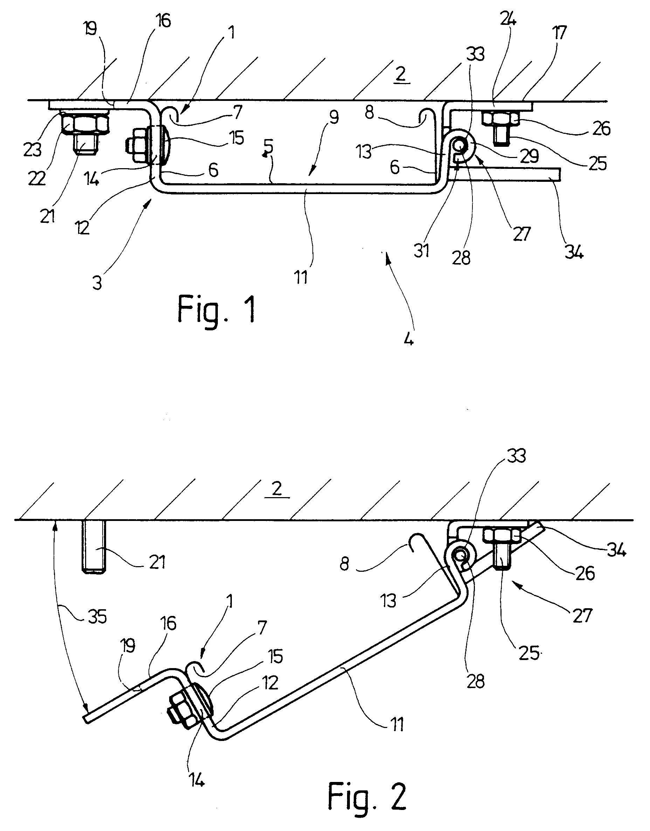

In Fig. 1 ist die Befestigung einer Kabelrinne 1 an einer Decke 2 mittels einer als Bügel 3 ausgebildeten Halteeinrichtung 4 dargestellt. Die Kabelrinne 1 ist ein im Querschnitt U-förmig gebogenes rinnenförmiges Blechteil mit einem im wesentlichen flachen Boden 5 und sich an diesen anschließenden rechtwinklig abgebogenen Seitenwänden 6. Zur Aussteifung der Seitenwände 6 und damit keine Blechkanten offen zutage liegen, sind an den Rändern der Seitenwände 6 jeweils Umbiegungen 7, 8 mit einem geringen Biegeradius vorgesehen, in denen die Seitenwände 6 nach innen umgebogen sind. Sowohl im Boden 5 der Kabelrinne als auch in den Seitenwänden 6 sind nicht weiter dargestellte Befestigungs- und Belüftungslöcher angeordnet.

Der zur Halterung der Kabelrinne 1 verwendete Bügel 3 ist vorzugsweise ein aus verzinktem oder anderweitig korrosionsgeschütztem Flachmaterial gefertigter Metallbügel. Er weist einen U-förmigen Abschnitt 9 auf, der durch einen sich in Gebrauchsstellung parallel zu der Decke 2 erstreckenden geraden Trageteil 11 und zwei sich beidseits an diesen anschließende Seitenschenkel 12, 13 gebildet ist, die von dem Trageteil 11 senkrecht nach oben gerichtet und zueinander parallel sind. Zur Vermeidung von Durchbiegungen des Bügels 3 unter Last kann der rechteckige Trageteil 11 mit nicht weiter dargestellten und an sich bekannten Aussteifungen in Form von in Bügellängsrichtung verlaufenden Sicken versehen sein. Bei der Verwendung relativ dicken und steifen Materials für den Bügel 3 kann auf die Aussteifungen auch verzichtet werden. Die Länge des Trageteiles 11 und damit der Abstand der Seitenschenkel 12, 13 voneinander entspricht der Breite der Kabelrinne 1, so daß diese passend in dem U-förmigen Abschnitt liegt und mittels einer sowohl den Seitenschenkel 12 an einem Loch 14 als auch die Seitenwände 6 der Kabelrinne 1 durchgreifenden Schloßschraube 15 befestigbar ist.

Beide Seitenschenkel 12, 13 sind rechtwinklig in gleicher Höhe L-förmig als Befestigungsabschnitte 16, 17 jeweils nach außen abgebogen. Die Befestigungsabschnitte 16, 17 liegen in einer gemeinsamen Ebene 18, deren Abstand von dem Trageteil 11 gleich oder geringfügig größer ist als die Höhe der Seitenwände 6 der Kabelrinne 1. Der Abstand ist so bemessen, daß die Kabelrinne 1 bei geschlossener Halteeinrichtung 4 in einem sehr geringen Abstand unter der Decke 2 hängt, so daß lediglich geringe Zwischenräume zwischen den Umbiegungen 7, 8 der Kabelrinne 1 und der Decke 2 verbleiben.

In dem Befestigungsabschnitt 16 ist ein in der Fig. 1 verdeckt dargestelltes randoffenes Langloch 19 vorgesehen, das von einem gewindetragenden und in der Decke 2 verankerten Befestigungsbolzen 21 durchgriffen ist. Der Befestigungsabschnitt 16 ist mit dem Befestigungsbolzen 21 mittels einer Sechskantmutter 22 unter Zwischenlage einer Unterlegscheibe 23 an der Decke 2 befestigt.

Der Befestigunsabschnitt 17 weist ein verdeckt dargestelltes Loch 24 auf, an dem er mittels eines weiteren gewindetragenden Befestigungsbolzens 25 unter Verwendung einer Sechskantmutter 26 an der Decke 2 befestigt ist.

Der Seitenschenkel 13 enthält in seinem Verlauf ein Drehgelenk 27, dessen Schwenkachse 28 parallel zu der Längsrichtung der Kabelrinne 1 liegt. Zur Ausbildung des Drehgelenks 27 ist der dem Trageteil 11 zunächst liegende Abschnitt des Seitenschenkels 13 gegabelt und läuft in zwei Laschen 29 aus, die nach außen zu Ösen 31 gebogen sind, die in Längsrichtung miteinander fluchten. An dem dem Befestigungsabschnitt 17 zunächst liegenden Abschnitt des Seitenschenkels 13 ist eine in Fig. 1 verdeckte Lasche vorgesehen, die ebenfalls zu einer Öse 32 gebogen und zwischen den Ösen 31 angeordnet ist. In die Ösen 31, 32 ist ein Lagerbolzen 33 eingefügt, der entweder in den Ösen 31 oder in der Öse 32 fest gehalten ist.

Zur Begrenzung des Schwenkbereiches des Bügels 3 ist ein Anschlag 34 vorgesehen, der sich von dem Seitenschenkel 13 weg über den Befestigungsabschnitt 17 hinaus erstreckt. Der Anschlag 34 liegt ungefähr parallel zu der Ebene 18 und ist bspw. durch einen entsprechend umgebogenen Fortsatz des Bügels 3 gebildet. Er ist so gestaltet, daß er sich in aufgeklapptem Zustand an der Decke 2 abstützen kann und den Bügel 3 in einem Winkel hält, in dem der Trageteil 11 mit der Decke 2 einen Winkel von ungefähr 30° einschließt.

Die insoweit beschriebenen Halteeinrichtung 3 wird auf die im folgenden beschriebene Weise verwendet:
Die Kabelrinne 1 ist in der in Fig. 1 dargestellten Weise mit Hilfe mehrerer in jeweils ungefähr gleichen Abständen angeordneten Halteeinrichtungen 4 an der Decke 2 befestigt. Weil alle Halteeinrichtungen 4 geschlossen sind, bildet die Kabelrinne 1 mit der Decke 2 einen geschlossenen Kanal.

Sollen nun Kabel oder Leitungen in die Kabelrinne 1 eingelegt werden, werden die Sechskantmuttern 22 nacheinander gelöst und zusammen mit den Unterlegscheiben 17 abgenommen. Daraufhin läßt sich jeweils der Teil der Kabelrinne 1 nach unten klappen, dessen Bügel 3 bereits gelöst sind. Wie in Fig. 2 dargestellt ist, stoßen die Anschläge 34 dabei jeweils an der Decke 2 an und verhindern ein zu weites Herunterklappen des Bügels 3 und damit der Kabelrinne 1. Wenn der Bügel 3 heruntergeklappt ist, schließt der Boden 5 der Kabelrinne 1 mit der Decke 2 einen Öffnungswinkel 35 von ungefähr 30° ein. Dadurch wird einerseits sicher vermieden, daß bereits verlegte Kabel aus der Kabelrinne 1 herausfallen könnten, andererseit ist ein guter Zugang zum Inneren der Kabelrinne gewährleistet.

Derjenige Abschnitt der Kabelrinne 1, der zwischen einem noch festen und einem bereits gelösten und heruntergeklappten Bügel 3 liegt, erfährt eine Torsion um seine Längsachse. Diese Torsion liegt jedoch in dem elastischen Verformungsbereich der Kabelrinne 1 und ist deshalb unkritisch und zulässig. Wegen der Torsion bleibt der dem Drehgelenk 27 zunächstliegende Rand der Kabelrinne 1 der Decke benachbart, während sich der andere Rand von der Decke entfernt; er hängt gewissermaßen zwischen den ungeöffneten Bügeln durch.

Sind die Halteeinrichtungen 4 in der beschriebenen Weise geöffnet, können ohne Schwierigkeiten Kabel eingelegt oder herausgenommen werden. Wenn die notwendigen Arbeiten an der Kabelrinne 1 beendet sind, wird ein Bügel 3 nach dem anderen an die Decke geschwenkt und mit der jeweiligen Sechskantmutter 22 an der Decke 2 arretiert. Diese Arbeit wird nacheinander an allen Bügeln 3 vorgenommen. Dabei ergibt sich wiederum eine unkritische Verdrehung für die Kabelrinne 1 in dem Bereich zwischen einer bereits geschlossenen Halteeinrichtung 4 und den noch offenen Halteeinrichtungen 4. Wenn alle Halteeinrichtungen 4 geschlossen sind, liegt die Kabelrinne 1 beinahe dicht an der Decke 2 an, so daß der Platzbedarf der geschlossenen Kabelrinne 1 in der Höhe kaum größer ist als die Kabelrinne 1 selbst.

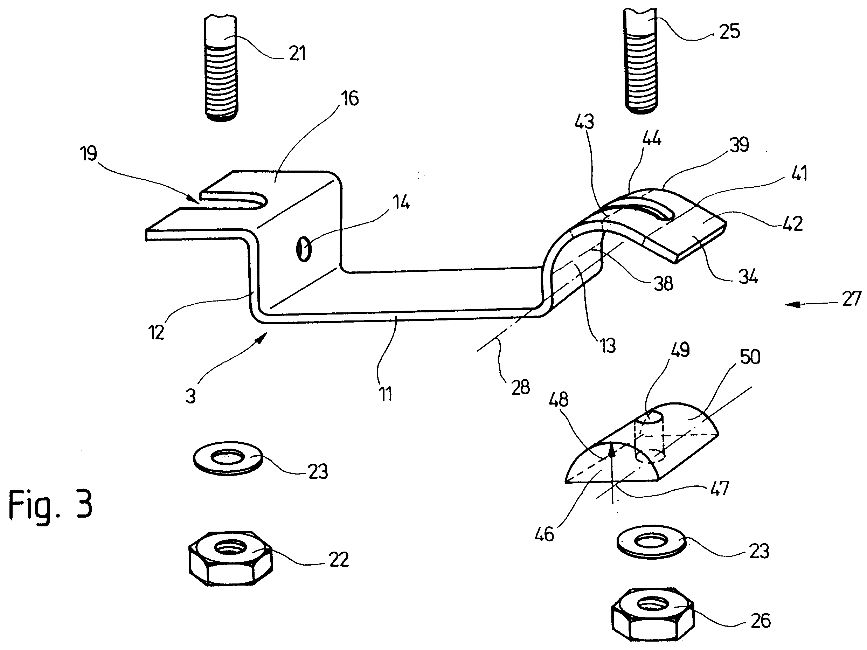

Eine bevorzugte, in den Fig. 3, 4 und 5 dargestellte Ausführungsform der Erfindung weist einen Bügel 3 mit einem besonders einfach und robust gestalteten Drehgelenk 27 auf. Bis auf die Gestaltung des Drehgelenks 27 stimmt der Bügel 3 mit dem vorstehend beschriebenen Ausführungsbeispiel überein. Deshalb werden in folgenden für wiederkehrende Teile, die bereits in dem vorstehend beschriebenen Ausführungsbeispiel mit Bezugszeichen versehen und beschrieben sind, dieselben Bezugszeichen verwendet. An den horizontalen Trageteil 11 schließen sich die rechtwinklig nach oben gebogenen Seitenschenkel 12, 13 an, so daß ein U-förmiger Abschnitt gebildet ist. Die Seitenschenkel 12, 13 gehen in Biegelinien in den Trageteil über, die zueinander parallel sind. Der Seitenschenkel 12 ist, in einer von dem Trageteil 11 gemessenen Höhe, die der Höhe der Seitenwand 6 der Kabelrinne 1 entspricht, nach außen abgewinkelt und bildet somit den Befestigungsabschnitt 16. In dem Seitenschenkel 12 ist das Befestigungsloch 14 für die Kabelrinne 1 vorgesehen, und in dem planen Befestigungsabschnitt 16 ist das randoffene Langloch 19 zur Aufnahme des Befestigungsbolzens 21 angeordnet.

Der sich von dem Trageteil 11 rechtwinklig nach oben erstreckende Seitenschenkel 13 ist im Abstand von dem Trageteil 11 ab der Stelle 38 mit konstanter Krümmung nach außen gebogen. Es entsteht ein bogenförmiger zur Lagerung vorgesehener Abschnitt 39, dessen Krümmungsachse etwa der Schwenkachse 28 entspricht und parallel zu der Längsachse der Kabelrinne 1 liegt, wobei die Länge des Abschnitts 39 einen Zentriwinkel von ca. 120° entspricht. An seinem freien Ende 41 geht der bogenförmige Abschnitt 39 tangential, d.h. knickfrei in einen als Anschlag 34 vorgesehenen geraden Abschnitt 42 über. Dieser verläuft unter einem Winkel von ca. 30° gegenüber der von dem Boden 5 der Kabelrinne 1 definierten Ebene. Er entspricht gebrauchsmäßig dem als Lasche ausgebildeten Anschlag 34 des Ausführungsbeispiel nach Fig. 1 und 2. Der bogenförmige Abschnitt 39 bildet an seiner höchsten Stelle eine Scheitellinie 43, die von der vorerwähnten Ebene denselben Abstand aufweist, wie der ebene rechteckige Befestigungsabschnitt 16.

In dem Abschnitt 39 ist ein sich in Umfangsrichtung erstreckendes Langloch 44 vorgesehen, dessen Ausdehnung in Bügellängsrichtung größer als der durch den Öffnungswinkel 35 gegebene Schwenkbereich des Bügels 3 ist. Es beginnt etwa bei der Scheitellinie 43 und erstreckt sich bis in den Abschnitt 42; seine genaue Lage ergibt sich aus der Funktionsbeschreibung. Quer zu dem Bügel 3 ist das Langloch 44 so bemessen, daß der Befestigungsbolzen 25 gut durchpaßt.

Der Abschnitt 39 bildet einen Teil des Drehgelenks 27, das bei dem Ausführungsbeispiel nach Fig. 3 von einem teilzylindrischen Lagerbolzen 46 der Form eines parallel zu seiner Längsachse 47 geschnittenen Zylinders vervollständigt ist. Der Radius 48 des teilzylindrischen Lagerbolzens 46 ist gleich oder geringfügig geringer als der Biegeradius des bogenförmigen Abschnittes 39. Durch den Lagerbolzen 46 geht radial und etwa mittig eine Bohrung 49 durch, deren Durchmesser dem Befestigungsbolzen 25 entspricht. Er bildet eine zylindrische Auflagefläche 50 für den bogenförmigen Abschnitt 39.

In Gebrauch liegt der Abschnitt 39 zwischen der Decke 2 und der Auflagefläche 50 des Lagerbolzens 46, der seinerseits durch die auf dem Befestigungsbolzen 25 aufgeschraubt Mutter 26 auf dem Befestigungsbolzen 25 festgehalten ist. Dabei geht der Befestigungsbolzen 25 durch das Langloch 44 sowie die Bohrung 49.

Mit dem Bügel 3 nach den in Fig. 3 dargestellten Ausführungsbeispiel können Kabelrinnen 1 auf die in wesentlachen gleiche einfache Weise, wie sie bereits für das Ausführungsbeispiel nach Fig. 1 beschrieben wurde, montiert und bestückt werden:

Bei der Montage der Kabelrinne 1 werden zunächst die Befestigungsbolzen 21, 25 in entsprechend vorgebohrten Dübellöchern verankert. Im nächsten Schritt werden die Bügel 3 mit den jeweiligen Abschnitten 39 auf den jeweils zugehörigen Befestigungsbolzen 25 aufgesteckt und unter Zwischenlage des Lagerbolzens 46 mit der Sechskantmutter 26 gesichert. Die Bügel 3 werden jedoch nicht fest gegen die Decke 2 geschraubt und sind deshalb auf dem Lagerbolzen 46 schwenkbar. Sie schwenken herunter, bis der gerade Abschnitt 42 an der Decke 2 anschlägt. Die Bügel 3 hängen in einem Winkel von etwa 30° gegenüber der Horizontalen von der Decke 2 herunter. Nunmehr wird die Kabelrinne 1 eingelegt und mit Schloßschrauben 15 an den Bügeln 3 befestigt. Die Kabelrinne 1 hängt nun bezogen auf ihre Querrichtung schräg unter der der Decke 2, und zwar so, daß der dem Drehgelenk 27 zunächst liegende Rand mit seiner Umbiegung 8 nahe bei der Decke 2 verläuft und der Rand mit seiner Umbiegung 7 in einem größeren Abstand von der Decke 2 verläuft. Ddurch ist das Innere der Kabelrinne 1 zugänglich, so daß ohne Schwierigkeiten Kabel eingelegt werden können. Sobald die Kabel eingelegt sind, werden die Bügel 3 einer nach dem anderen nach oben geklappt, wobei sie in dem Drehgelenk 27 um die Schwenkachse 28 schwenken, bis der jeweilige Befestigungsabschnitt 16 an der Decke 2 anliegt. Auf dem aus dem Langloch 19 hervorschauendem Befestigungsbolzen 21 wird sodann die Mutter 22 aufgeschraubt, wodurch der jeweilige Bügel 3 in der horizontalen Lage gehalten ist. Diese Arbeit wird nacheinander an allen Bügeln 3 vorgenommen. Dabei ergibt sich wiederum eine unkritische Verdrehung für die Kabelrinne 1 in dem Bereich zwischen einem bereits hochgeklappten Bügel 3 und den noch noch herabhängenden Bügeln 3. Wenn alle Halteeinrichtungen 4 geschlossen sind, liegt die Kabelrinne 1 beinahe dicht an der Decke 2 an, so daß der Platzbedarf der geschlossenen Kabelrinne 1 in der Höhe kaum größer ist als die Kabelrinne 1 selbst. Die Kabel liegen nun geschützt in der Kabelrinne.

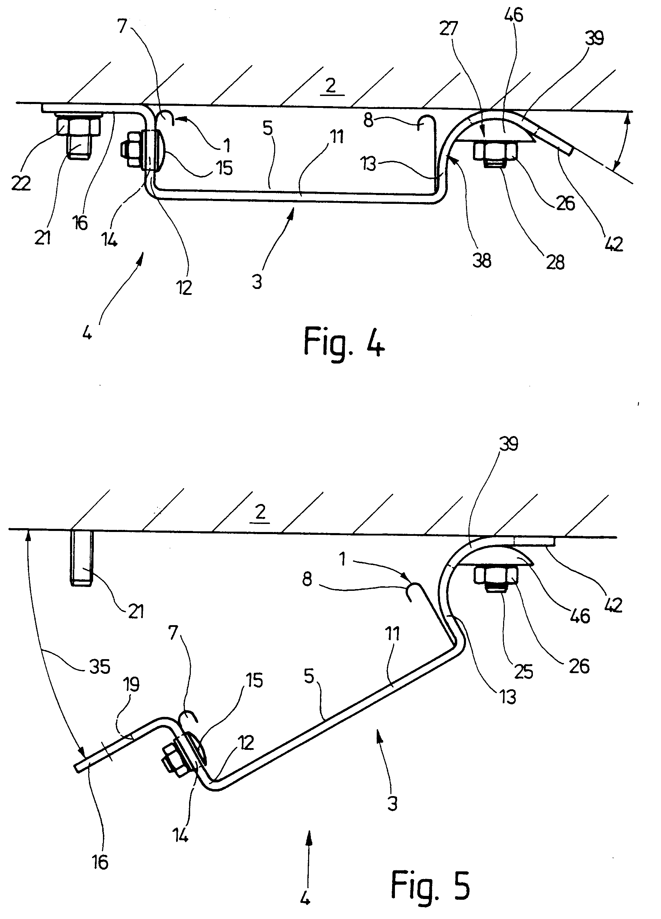

Sollen nachträglich Kabel in die Kabelrinne einzulegen oder herauszunehmen sein, läßt sich die Kabelrinne auf einfache Weise öffnen. Hierzu wird in der umgekehrten Weise vorgegangen wie bereits erläutert. Es werden durch Abnehmen der Sechskantmuttern 22 nacheinander die gewünschte Anzahl von Bügeln 3 heruntergeschwenkt. Daraufhin läßt sich jeweils der Teil der Kabelrinne 1 nach unten klappen, dessen Bügel 3 bereits gelöst sind. Wird ein Bügel 3 nach unten geschwenkt, dreht sich der Bügel 3 mit seinem Abschnitt 39 um dem teilzylindrischen Lagerbolzen 46. Das in dem Abschnitt 39 angeordnete Langloch 44, das von dem Befestigungsbolzen 25 durchgriffen ist, ist so bemessen, daß so daß der Befestigungsbolzen 25 nicht an dem Rand des Langloches anschlagen kann. Wie in Fig. 4 dargestellt ist, legt sich der Abschnitt 42 bei heruntergeklapptem Bügel 3 an der Decke 2 an und verhindert dadurch ein zu weites Herunterklappen des Bügels 3 und damit der Kabelrinne 1. Wenn der Bügel 3 heruntergeklappt ist, der Boden 5 der Kabelrinne 1 mit der Decke 2 den Öffnungswinkel 35 von ungefähr 30° ein. Dadurch wird sicher vermieden, daß bereits verlegte Kabel aus der Kabelrinne 1 herausfallen. Gleichwohl ist ein guter Zugang zum Inneren der Kabelrinne 1 gewährleistet.

Es ist dabei sowohl möglich die gesamte Kabelrinne 1 zu öffnen, ein Kabel einzulegen und die Kabelrinnen nachfolgend wieder zu schließen, als auch abschnittsweise vorzugehen und lediglich eine oder wenige Halteeinrichtungen 4 zu öffnen, das Kabel einzulegen und die Kabelrinne 1 wieder zu schließen. Im letztgenannten Fall setzt sich im Verlaufe der Arbeit der geöffnete Teil der Kabelrinne quasi wie eine durchlaufende Welle entlang der Kabelrinne fort.

Die Halteeinrichtung 4 mit dem Bügel 3 erweist sich insbesondere im Bereich des Scharniers 27 als besonders stabil und ist deshalb zum Halten von relativ schweren Kabelrinnen 1 gut geeignet. Darüberhinaus ist der Bügel 3 einfach zu fertigen.

## Patentansprüche

1. Halteeinrichtung zur Befestigung von Kabelrinnen, Kabelpritschen oder dergleichen an einer Decke, mit einem zur Aufnahme und formschlüssigen Halterung einer Kabelrinne oder dergleichen eingerichteten U-förmigen Bügel, mit zwei seitlichen voneinander beabstandeten Seitenschenkeln, die durch einen Trageteil miteinander verbunden sind, auf dem eine Kabelpritsche oder -rinne aufliegt, wobei einer der Seitenschenkel zur Anbringung an einer Decke mittels Befestigungselementen eingerichtet ist, dadurch gekennzeichnet, daß ein an der Decke (2) mittels eines weiteren Befestigungselementes (25, 26) anzubringendes Drehgelenk (27) vorgesehen ist, und daß das Drehgelenk (27) dem anderen Seitenschenkel (13) zugeordnet ist.

2. Halteeinrichtung nach Anspruch 1, dadurch gekennzeichnet, daß das Drehgelenk (27) eine Schwenkachse (28) aufweist, die parallel zu der Längserstreckung der Kabelrinne (1) oder -pritsche angeordnet ist.

3. Halteeinrichtung nach Anspruch 2, dadurch gekennzeichnet, daß das Drehgelenk (27) eine Schwenkachse achse (28) bestimmenden zylinderförmigen Lagerbolzen (33) aufweist.

4. Halteeinrichtung nach Anspruch 1, dadurch gekennzeichnet, daß der schwenkbar gelagerte Bügel (3) einen Anschlag (34) zur Begrenzung der Schwenkbewegung aufweist.

5. Halteeinrichtung nach Anspruch 4, dadurch gekennzeichnet, daß der Anschlag (34) eine von dem Seitenschenkel (13) wegstehende Lasche ist.

6. Halteeinrichtung nach Anspruch 1, dadurch gekennzeichnet, daß der Lagerbolzen (46) teilzylindrisch ausgebildet ist und einen Durchmesser aufweist, der deutlich größer ist als der des Befestigungsbolzens (25).

7. Halteeinrichtung nach Anspruch 6, dadurch gekennzeichnet, daß der mit dem Drehgelenk (27) verbundene Seitenschenkel (13) einen kreisbogenförmig gebogen Abschnitt (39) aufweist, dessen Biegeradius geringfügig größer als der Radius des Lagerbolzens (46) ist.

8. Halteeinrichtung nach Anspruch 6, dadurch gekennzeichnet, daß der Lagerbolzen (46) eine etwa mittig radial durchgehende Bohrung (49) aufweist, deren Durchmesser geringfügig größer als der Durchmesser des als Befestigungselement dienenden Befestigungsbolzens (25) ist.

9. Halteeinrichtung nach Anspruch 6, dadurch gekennzeichnet, daß der Abschnitt (39) ein sich in der Umfangsrichtung seiner Biegung erstreckendes Langloch (44) aufweist, dessen Breite größer ist, als der Durchmesser des Befestigunsbolzens (25) und dessen Länge größer ist als der Schwenkbereich des Bügels (3).

10. Halteeinrichtung nach Anspruch 9, dadurch gekennzeichnet, daß der Befestigungsbolzen (25) durch das Langloch (44) und die Bohrung (49) in dem Lagerbolzen (46) durchgeht.

11. Halteeinrichtung nach Anspruch 6, dadurch gekennzeichnet, daß der Abschnitt (39) ein freies Ende (41) aufweist, das in gerader Verlängerung des Bügels (3) von dem Lagerbolzen (46) wegweisend als Anschlag (34) ausgebildet ist.

12. Halteeinrichtung nach Anspruch 1, dadurch gekennzeichnet, daß die Befestigungselemente (25) in Gebäudeteilen verankerbare Befestigungsbolzen (25) sind.

13. Halteeinrichtung nach Anspruch 1, dadurch gekennzeichnet, daß der Bügel (3) an den die Befestigungsabschnitte (16, 17) bzw. den Abschnitt (39) durchgreifenden Befestigungsbolzen (21, 25) mit Sechskantmuttern (22, 26) lösbar befestigt ist.

14. Halteeinrichtung nach Anspruch 8, dadurch gekennzeichnet, daß der Anschlag (34) mit dem Trageteil (11) des Bügels (3) einen den Schwenkbereich des Bügels (36) festlegenden Winkel (35) einschließt.
